(19) Europäisches Patentamt
European Patent Office
Office européen des brevets

(11) **EP 3 818 495 B1**

## (12) FASCICULE DE BREVET EUROPEEN

(45) Date de publication et mention
de la délivrance du brevet:
**08.06.2022 Bulletin 2022/23**

(21) Numéro de dépôt: **19734430.2**

(22) Date de dépôt: **04.07.2019**

(51) Classification Internationale des Brevets (IPC):
***G06T 5/00*** *(2006.01)*

(52) Classification Coopérative des Brevets (CPC):
**G06T 5/007;** G06T 2207/10044; G06T 2207/20208

(86) Numéro de dépôt international:
**PCT/EP2019/067995**

(87) Numéro de publication internationale:
**WO 2020/007981 (09.01.2020 Gazette 2020/02)**

(54) **PROCEDE ET DISPOSITIF D'AFFICHAGE DE DONNEES SONAR OU RADAR A HAUTE DYNAMIQUE**

VERFAHREN UND VORRICHTUNG ZUR ANZEIGE VON HOCHDYNAMISCHEN SONAR- ODER RADARDATEN

METHOD AND DEVICE FOR DISPLAYING HIGH-DYNAMIC SONAR OR RADAR DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2018 FR 1800714**

(43) Date de publication de la demande:
**12.05.2021 Bulletin 2021/19**

(73) Titulaire: **THALES**
**92400 Courbevoie (FR)**

(72) Inventeur: **ARNOLD, Andreas**
**06903 SOPHIA ANTIPOLIS (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 3 340 167     WO-A1-2015/184300**

• **SHAW K B ED - PENNINGTON K S ET AL: "DIGITAL FILTERING/ENHANCEMENT/ANALYSIS OF GEOLOGIC LONG-RANGE INCLINED ASDIC (GLORIA) ACOUSTIC IMAGERY", IMAGE PROCESSING ALGORITHMS AND TECHNIQOES. SANTA CLARA, FEB. 12 - 14, 1990; [PROCEEDINGS OF SPIE], BELLINGHAM, SPIE, US, vol. 1244, 12 février 1990 (1990-02-12), pages 429-435, XP000167608,**
• **MERTENS T ET AL: "Exposure Fusion", COMPUTER GRAPHICS AND APPLICATIONS, 2007. PG '07. 15TH PACIFIC CONFERENCE ON, IEEE, PISCATAWAY, NJ, USA, 29 octobre 2007 (2007-10-29), pages 382-390, XP031338475, ISBN: 978-0-7695-3009-3**

**Description**

**Domaine de l'invention**

L'invention concerne le domaine du sonar ou du radar. Plus précisément, l'invention concerne un procédé et un dispositif permettant la visualisation de données dont la dynamique en amplitude est trop importante pour être directement rendue sur un moyen de visualisation tel qu'un écran ou du papier après impression.

**Etat de la Technique**

Les données sonar ou radar sont caractérisées par le fait que leur dynamique est très importante, facilement 60 dB ou plus. Deux types de rendus de ces données sont classiquement utilisés : un rendu en échelle logarithmique ou un rendu de l'amplitude du signal après normalisation et écrêtage (connu en anglais comme « *clamping* »).

Le rendu sur échelle logarithmique a l'avantage de bien compresser la dynamique des images sur une plage pouvant être rendue à l'écran. Néanmoins ce rendu a l'inconvénient de gêner l'interprétation intuitive de l'image étant donné que l'on ne visualise pas l'amplitude du signal.

Dans le rendu en amplitude, les approches les plus communes font partie d'une famille de méthodes connues dans la communauté sous le nom de rendu à basse dynamique, ou en anglais, « *Low Dynamic Rendering* » (LDR). Les données à visualiser sont d'abord normalisées par application d'un contrôle automatique de gain ou d'un gain variable temporellement, sont ensuite écrêtées (en anglais « clamping » ) puis transcodées vers une couleur par le biais d'une fonction dite de transcodage (en anglais, « *transcoding* » ou « *color mapping* »), la luminance de ladite couleur suivant classiquement une loi non linéaire de « *tone mapping* ». L'écrêtage se justifie par le fait que seuls quelques points dans l'image (moins de 0,5% typiquement) sont réellement à des niveaux très importants, l'essentiel du signal étant concentré dans une plage de dynamique plus réduite (de l'ordre de 10 dB) qui est celle mise en avant par le rendu. L'inconvénient de cette méthode est que l'écrêtage donne la même importance à des données d'intensité très fortes et des données d'intensité intermédiaires mais néanmoins trop importantes pour être correctement rendues sur le moyen de visualisation envisagé (écran, papier). En effet, ces données importantes, bien que statistiquement peu présentes dans l'image, sont en réalité porteuses d'information car ce sont des échos forts trahissant la présence d'un objet ou d'une cible.

Des tentatives plus récentes utilisent des techniques dites de rendu à haute dynamique ou HDR pour « *High Dynamic Rendering* » en anglais, permettant de mélanger des images acquises à des niveaux de gains différents pour obtenir une seule image unique, afin de privilégier localement le niveau de gain permettant de voir le mieux les détails. Cette image unique est affichée avec une dynamique plus faible adaptée au moyen de visualisation. L'inconvénient de cette technique, prise telle quelle, est que des points isolés d'intensité très forte, seront malgré tout difficile à percevoir car leur étendue spatiale reste trop faible.

Le problème de ces approches LDR et HDR est qu'il n'est pas possible de visualiser des données dont la dynamique peut excéder 30 dB, car cela dépasse largement la dynamique admissible par un médium d'affichage commun (écran, papier) ou par l'œil humain. Par ailleurs, ces techniques ne permettent pas de visualiser des images à haute dynamique où des points de forte intensité sont statistiquement peu présents (typiquement moins de 0.5% des cas), ces points de forte intensité présentant une étendue spatiale faible dans l'image. Dans cette situation, le rendu direct de l'image avec une carte de couleurs représentant l'amplitude du signal à représenter vers un niveau de gris linéaire est problématique. En effet, la majeure partie du signal étant de faible intensité, sauf pour quelques rares points brillants, l'image apparaîtrait comme globalement noire.

Pour mieux comprendre les inconvénients des techniques précitées, le problème technique à résoudre est formulé comme ci-après.

Soit $I(x,y)$ la donnée image issue d'un senseur, un réel situé dans un intervalle $[A,B]$. Dans le cas où l'image est issue d'un radar ou d'un sonar on note $\rho(x, y)$ la distance du point de coordonnées $(x,y)$ au senseur au moment où l'information correspondant au dit point est acquise. Le temps et l'espace sont liés en radar et sonar par la relation $\rho = ct/2$ où $p$ est la distance de la cible au senseur, $t$ est le temps aller-retour de l'onde et $c$ la célérité de l'onde. La distance $\rho$ est donc également proportionnelle à un temps.

La donnée affichée en sortie $O(x, y) = [r(x,y);g(x,y);b(x,y)]^T$ est la donnée affichée (un vecteur de trois composantes entre $[0,1]$ codant les composantes rouge $r(x,y)$, vert $g(x,y)$, bleu $b(x,y)$ de la couleur affichée). La donnée affichée est supposée résider dans l'intervalle $[0,1]$ tandis que la donnée issue du senseur est supposée résider dans un intervalle $[A, B]$. La valeur $B - A$ est la dynamique du signal d'entrée.

Dans la problématique évoquée où le signal est de forte dynamique, alors $B - A \gg 1$ (typiquement $B - A$ peut aller jusqu'à $10^{12}$ en sonar ou en radar, voire beaucoup plus).

Selon l'approche de traitement d'image retenue, le codage des données est le suivant :

- Dans la solution dite naïve de codage simple par la couleur, le codage de l'information par la couleur consiste à associer une couleur à une intensité *I(x,y)* avec une carte couleur (« *color map* » en anglais) judicieusement choisie afin que les intensités faibles soient dans des tons données (par exemple des tons rouges), les intensités moyennes soient dans d'autres tons (par exemple des tons verts), et enfin des intensités fortes dans encore d'autres tons (par exemple des tons bleus). La donnée en sortie *O(x, y)* peut être représentée par l'équation :

*O(x, y) = c(I(x,y))* où 'c' représente la carte couleur.

L'inconvénient de cette solution de codage simple par la couleur, est la difficulté à lire l'image par une surcharge de couleurs, ainsi que des problèmes perceptuels et de goûts personnels des opérateurs. Il y a aussi l'habitude des opérateurs à manipuler une image essentiellement monochrome (en nuances de gris, de vert ou d'ambre) étant donné que la donnée sonar ou radar a été affichée jusqu'à récemment (début des années 2000) sur des écrans cathodiques monochromes ou imprimés sur du papier thermique: c'est la luminance de la couleur qui, essentiellement, code l'information d'amplitude du signal.

- Dans l'approche LDR « *Low Dynamic Rendering* », les données à afficher subissent classiquement un traitement comprenant des opérations de normalisation (1), d'écrêtage (2) et de transcodage (3). En entrée, la donnée (2D) à afficher *I(x,y)* est comprise dans un intervalle [*A, B*] et est proportionnelle au signal mesuré. Le traitement consiste en :

(1) La normalisation des données *N(x,y)* par rapport à une valeur de référence. Celle-ci peut être réalisée dans le domaine du sonar ou du radar, soit:

1.a. par un gain variable dans le temps (TVG) pour « *Time Variable Gain*», c'est-à-dire par une loi *f(ρ(x,y))* prédéfinie dépendant de la géométrie du problème:

$$N(x,y) = (I(x,y) - A) \times f(\rho(x,y))$$

1.b. par un contrôle automatique de gain local (AGC) pour « *Automatic Gain Control* » qui revient à appliquer un filtre passe-haut *h* au signal par convolution ou par filtrage récursif afin de supprimer une composante moyenne lentement variable:

$$N(x,y) = (I(x,y) - A) \star h(x,y)$$

Dans les deux cas 1.a et 1.b, la fonction *f* ou *h*, est judicieusement choisie pour qu'en moyenne, *N(x,y)* soit voisine d'une valeur cible *m* définie comme un paramètre du problème. Cette valeur est prise égale à 1 pour la suite de la description.

Le gain variable dans le temps ou le contrôle automatique de gain local peut être implémenté soit dans un circuit électronique analogique comme un étage de mise en forme de la donnée (avant conversion analogique vers numérique, CAN, dans le cas où le composant de CAN est de dynamique faible), soit de manière numérique avant affichage.

La manière exacte de calculer les deux fonctions *f* ou *h* dépend du senseur et peut varier dans les détails sans changer l'esprit du traitement.

(2) L'écrêtage des données *E(x,y)* pour les forcer à résider dans un intervalle [0,T] avec *m < T* :

*E(x,y) = min(N(x,y),T)* où la valeur de *T* est un paramètre du problème.

(3) Le transcodage des données vers une carte de couleurs:

*O(x, y) = c(E(x,y))* avec [0, *T*] ↦ [0,1]³ choisie judicieusement pour percevoir au mieux les données. La fonction *c* est la «carte des couleurs » utilisée pour le rendu des données.

En sortie, l'image 2D couleur *O(x, y)* est affichée.

Un premier inconvénient de l'approche LDR est la perte d'information de la valeur originale du signal suite à l'étape (1) de normalisation. En effet les données sont ramenées à une valeur moyenne *m* qui n'est pas forcément dans l'intervalle d'origine [*A,B*]. Il n'y a donc plus de lien direct entre la « couleur » présentée à l'écran et l'intensité mesurée du signal.

Un second inconvénient de cette méthode est l'étape (2) d'écrêtage qui ramène à une couleur identique toutes les données supérieures à la valeur *m*. Ce problème est très pénalisant pour l'identification de cibles caractérisées par des intensités *I(x,y)* très importantes, qui après l'écrêtage, vont être représentées à l'identique d'autres cibles d'intensité beaucoup plus faible, mais pourtant ramenées également à la valeur *T*. Il est donc impossible de distinguer des échos très forts, d'échos d'intensité intermédiaire, car les deux types sont en général supérieurs à *T* et sont donc représentés de la même manière. Idéalement la valeur de *T* doit être la plus grande possible afin que la probabilité de trouver une valeur *N(x,y) > T* soit la plus faible possible, mais cela n'est pas toujours possible.

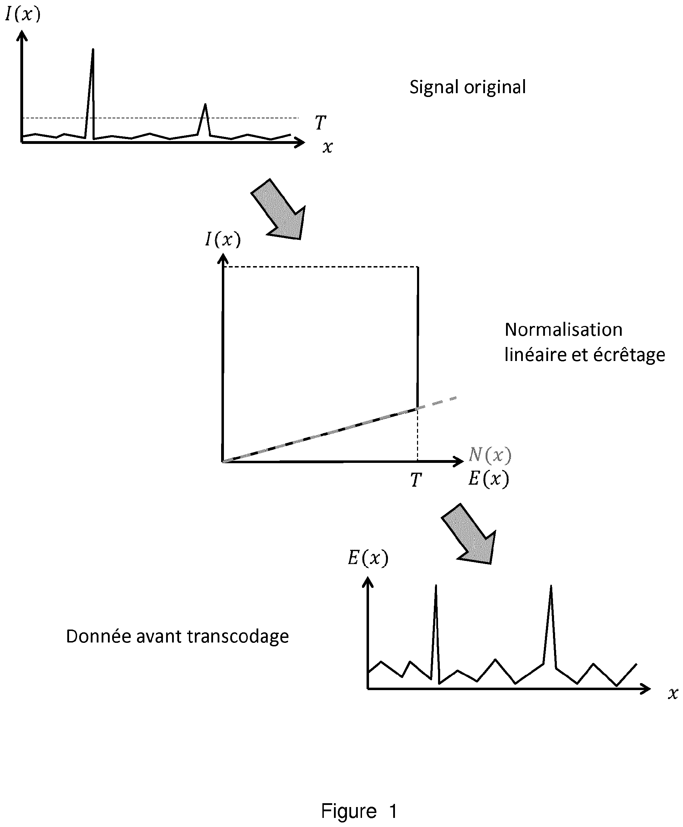

La figure 1 permet d'illustrer les inconvénients précités des fonctions de normalisation et d'écrêtage (avant le transcodage) sur un exemple simplifié de signal 1D. Il est visible sur la courbe du bas, qu'après l'écrêtage les deux pics d'intensités élevées sont représentés à la même valeur alors qu'ils sont pourtant d'intensité différente dans le signal d'origine tel que montré sur la courbe du haut.

Certaines améliorations sont proposées à cette approche. Pour les décrire, on notera *L* la luminance associée à la couleur *c*, et qui est définie dans la norme ITU BT.709 par l'équation ci-après:

$$L(c) = 0,2126r + 0,7152g + 0,0722b$$

où $c = [r;g;b]^T$ avec *r,g,b* le triplet de couleurs rouge, vert, bleu (de valeurs codées entre 0 et 1). Dans la suite on notera $L(x,y)$ la luminance associée à la couleur codée au pixel de coordonnées $(x,y)$. On notera également S(c) la saturation de la couleur *c*, prise entre 0 et 1, et H(c) la nuance de la couleur *c*.

Une première amélioration de l'algorithme de rendu LDR précédent consiste naïvement à l'étape (3) de transcodage à choisir *c* de telle manière que *L* suive une loi linéaire en fonction de $c(E(x,y)) = [r(x,y);g(x,y);b(x,y)]^T$, ce qui exige généralement de choisir une valeur d'écrêtage *T* très proche de zéro afin de permettre à l'œil humain de voir les données intéressantes dans l'image. Or, il est souhaitable d'avoir *T* le plus grand possible puisque ce terme régule la dynamique perceptible dans le moyen de visualisation.

Une autre amélioration est l'utilisation à l'étape (3) de transcodage d'un procédé nommé « *tone mapping* », qui n'est rien d'autre que l'application d'une fonction non linéaire à $E(x,y)$. Dans le cas de données autres que du sonar ou du radar, par exemple des images photographiques, une loi qui est classiquement utilisée est la compression gamma : $L(x,y) = E(x,y)^\gamma$ où le paramètre $\gamma$ régule le contraste. Une valeur basse de $\gamma$ donne un contraste plus faible donc une image plus« terne» mais augmente la visibilité de zones de l'image où le signal $I(x)$ est faible.

Une autre manière de réaliser le « *tone mapping* » est de passer en échelle logarithmique. Ainsi, afficher les valeurs en décibels avec une rampe de couleurs linéaire dans le domaine logarithmique, est un exemple de *tone mapping* log-linéaire :
$L(x,y) = K_1.\log L(x,y) + K_2$. avec $K_1$ et $K_2$. des paramètres de la loi.

Dans le cas de données sonar ou radar actif, la fonction *c* est généralement choisie pour que la luminance *L* associée suive une loi substantiellement log-sigmoïdale, c'est-à-dire que si *m* = 1 alors l'évolution de $L(x,y)$ en fonction

$$L(x,y) = \frac{E(x,y)^\gamma}{E(x,y)^\gamma + 1}$$

de $E(x,y)$ suit une relation voisine de: avec $\gamma$ un paramètre réglant la pente de la fonction *L* autour de $E(x,y) = 1$ (cette pente vaut $\gamma/4$ et est laissée en général comme un paramètre de réglage de l'opérateur, puisque qu'elle correspond perceptuellement au contraste: plus $\gamma$ est faible, plus les zones de signal $I(x,y)$ faible seront lisibles). La forme de cette loi est justifiée physiquement par la loi de Weber-Fechner qui dicte que la perception humaine d'un grand nombre de stimuli, dont la vue, augmente de manière logarithmique avec l'intensité du stimulus, ce qui explique par exemple que la magnitude des étoiles soit prise comme une échelle logarithmique. On se rapproche donc d'une loi logarithmique pour des valeurs proches de 1, et on s'en éloigne ensuite pour des valeurs plus fortes.

Dans les deux cas le fait de jouer sur le paramètre y permet d'étendre quelque peu l'intervalle utile des données, c'est-à-dire d'augmenter *T*, mais cette augmentation reste bornée à des valeurs qui ne sont pas suffisantes pour être réellement utiles.

Des améliorations existent aussi sur l'approche en rendu HDR en imagerie optique et en sonar/radar. En notant $I(x,y)$ l'image brute captée par le senseur et $L(x,y)$ la luminance associée ($I = L$ dans le cas d'une image en niveaux de gris), le rendu HDR en imagerie optique consiste à acquérir une pluralité d'images $I_1(x,y),...I_n(x,y)$ de la même scène:

- soit par des réglages différents du senseur (exposition, ouverture, gains) avec des acquisitions réalisées consécutivement dans le temps dans un intervalle très court où l'on a donc $I_k(x,y)$, les réglages du senseur étant calés sur un intervalle de luminance $[A_{k-1},A_k]$ avec $A_0 = A$ et $A_n = B$.
- soit en faisant l'acquisition d'une seule image $I(x,y)$ puis en découpant l'intervalle $[A, B]$ en une pluralité d'intervalles de luminance $[A_0 = A,A_1],[A_2,A_3],...,[A_{n-2},A_{n-1}],[A_{n-1},A_n = B]$, puis en construisant :

$$I_k(x,y) = \begin{cases} I(x,y) \ si \ L(x,y) \in [A_k, A_{k+1}] \\ 0 \ sinon \end{cases}$$

Ensuite une image de dynamique plus faible est construite :

$$O(x,y) = \sum_{k=0}^{k=n-1} w_k(x,y) f(I_k(x,y))$$

avec $\sum_{k=0}^{n-1} w_k(x,y) = 1$, $w_k(x,y)$ étant un poids judicieusement choisi pour privilégier en $(x,y)$ la donnée $I_k$ avec $k$ choisi de telle sorte que $I_k(x,y)$ soit le plus proche possible du milieu de l'intervalle $[A_{k-1}, A_k[$ et la fonction $f$ réalisant le « *tone mapping* » de l'image pour la ramener à des composantes dans l'intervalle [0,1]. Concrètement, cette formulation permet de privilégier, en un pixel de coordonnées $(x,y)$, la valeur $k$ pour laquelle l'image $I_k(x,y)$ donne une intensité qui n'est ni sous-, ni surexposée. Par contre, un inconvénient fondamental est que la luminance de l'objet n'est plus nécessairement proportionnelle à l'intensité de la donnée brute.

Les documents suivants sont à considérer comme des techniques connues de rendu HDR et rendu amélioré en sonar, radar et en optique:

- Jarostaw Duda, *"Zastosowanie techniki HDR do obrazów pozyskiwanych z sektorowego sonaru skanuj$^{ja}$cego"*, Biuletyn WAT Vol. LX, Nr 3, 2011 ;

- Frédo Durand et Julie Dorsey, "Fast Bilateral Filtering for the Display of High-Dynamic-Range Images". ACM Transactions on Graphies, 2002, 21, 3, 257-266;

- P. E. Debevec, J. Malik, Recovering High Dynamic Range Radiance Maps from Photographs, International Conference on Computer Graphies and Interactive Techniques, Addison-Wesley Publishing Co., New York, USA, 1997;

- Martin Lambers, Andreas Kolb, "Adaptive Dynamic Range Reduction for SAR /mages", 7m European conference on synthetic aperture radar (EUSAR), 2008;

- Satoshi Hisanaga, Koji Wakimoto and Koji Okamura, "Compression Method for High Dynamic Range Intensity to Improve SAR Image Visibility", Proc. International MultiConference of Engineers and Computer Scientists 2011 vol. 1, IMECS 2011, March 16-18, 2011, Hong Kong.

La méthode décrite dans l'article de P.E. Debevec a été adaptée de l'optique pour le sonar par J. Duda. Une méthode voisine, celle de F. Durand et J. Dorsey a été adaptée de l'optique pour le domaine du radar par M. Lambers et A. Kolb et s'applique aussi bien au sonar. Une autre approche relativement voisine a été proposée par S. Hisanaga, K. Wakimoto et K. Okamura également dans le domaine du radar.

Les demandes de brevets suivantes sont citées comme proposant des solutions de rendu HDR :

- CN104408752B de XIDIAN University décrit une méthode de compression d'image à plage dynamique élevée, basée sur un algorithme de mappage de tons mixtes ; et

- WO2007113824 A2 décrit une méthode pour faciliter la visualisation en volume d'images synthétiques issues de données radar à plage dynamique élevée.

En résumé, les inconvénients des solutions existantes sont alors :

- Pour la méthode naïve : la difficulté de trouver une carte de couleur qui soit adaptée au problème et lisible par l'opérateur qui est habitué à voir des données d'amplitude essentiellement codées par la luminance (une amplitude plus grande du signal donne une luminance plus grande de sa représentation à l'écran).

- Pour la méthode classique LDR (normalisation, écrêtage, transcodage) : celle-ci ne permet d'afficher que des images ayant une dynamique utile faible. Cette dynamique peut être augmentée par une utilisation de techniques de *tone mapping*, mais ne permet cependant pas d'augmenter la dynamique de manière satisfaisante.

- Pour le rendu HDR: bien que permettant d'augmenter la dynamique de manière satisfaisante, cette approche a des limites pour les données qui présentent des pics d'intensité de taille spatiale très petite (un ou deux pixels de large). Bien qu'ils soient rendus avec une couleur différente par un procédé adapté, ces pics sont tellement petits qu'ils sont souvent difficiles à voir même à pleine résolution, et plus difficiles encore si l'image subit une réduction d'échelle (« zoom arrière »).

Il est donc nécessaire de fournir une solution qui ne présente pas les inconvénients précités, et qui permette de rapidement mettre en évidence des points de forte intensité tout en permettant une lecture adaptée et fiable d'une image là où l'intensité est faible, et ce quelle que soit l'échelle de visualisation de l'image.

La présente invention répond à ce besoin.

**Résumé de l'invention**

Un objet de la présente invention est de proposer une solution qui consiste essentiellement à combiner deux images: l'une correspondant à des dynamiques basses, l'autre correspondant à des dynamiques plus élevées. Les deux images sont rendues avec des nuances de couleurs différentes afin de pouvoir distinguer, à l'issue de la fusion, de quelle image d'origine provient l'information. Avantageusement, la solution se distingue d'un rendu haute dynamique classique par le fait que l'image contenant les informations correspondant aux fortes dynamiques, a au préalable subi un prétraitement permettant d'augmenter l'étalement spatial des points d'échos forts, la taille de cet étalement croissant avec l'amplitude du signal à représenter, tout en étant également contrôlé par l'échelle de visualisation de l'image à l'écran : vue globale ou vue locale avec fort grossissement, afin de permettre dans le premier cas de rapidement mettre en évidence tous les échos d'une grande zone, et dans l'autre cas, de mettre en évidence la structure des points d'échos forts, dits aussi «points brillants» (« bright points » en anglais), dans l'image des cibles. Ce prétraitement est de plus fondamentalement configuré de manière à ce que des échos très forts ne viennent pas perturber la lecture de zones d'intensité très faible situées à proximité, ce qui permet de comprendre l'image dans son entièreté. Le prétraitement est également configuré de manière à ce que l'étalement spatial des points brillants puisse optionnellement varier avec l'échelle de visualisation de l'image, permettant aux échelles les plus petites (images de détail) de percevoir la configuration des points brillants de la cible pour permettre à l'opérateur d'effectuer une tâche de classification, et permettant de mettre en évidence la cible en entier dans les échelles les plus grossières, afin d'assurer une tâche de détection.

L'invention permet en particulier de mettre rapidement des échos forts en évidence, d'évaluer l'indice de cibles sur une large plage de dynamique, ainsi que d'analyser la structure de la répartition de points brillants d'une cible.

Pour atteindre cet objectif, le procédé de l'invention pour visualiser des données d'imagerie à forte dynamique (typiquement sonar ou radar), permet de faire une moyenne pondérée pixel à pixel de deux images, l'une correspondant à des données de basse intensité, et l'autre à des données de haute intensité, les deux images étant rendues avec deux cartes de couleurs distinctes afin de mettre en évidence la nature de l'information à un pixel donné (basse ou haute intensité), l'image de haute intensité subissant un filtrage passe-bas dont la réponse impulsionnelle a une largeur croissant avec l'amplitude du signal à représenter et variant avec l'échelle de visualisation de l'image, de manière à mettre en évidence les échos forts, permettre une lecture visuelle de la répartition des points brillants, ainsi que de permettre d'avoir une estimation rapide et visuelle de l'intensité d'un point brillant.

L'invention présente les avantages suivants par rapport à l'état de l'art : elle met en évidence des points isolés d'intensité forte sans perturber la visibilité de points d'intensité faible au voisinage ; elle permet une lecture directe de l'intensité, éventuellement relative, des points ; elle permet également, par une utilisation judicieuse de l'échelle de visualisation dans l'étage de filtrage non linéaire, de permettre à un opérateur de réaliser des tâches de détection d'échos et d'analyse de la structure des échos par la seule manipulation de l'échelle de visualisation.

La présente invention trouvera une application avantageuse dans le domaine du sonar ou du radar. Dans le domaine spécifique du sonar, elle s'applique aussi bien au sonar d'imagerie (imagerie du fond, à des fins hydrographiques ou militaires, par exemple en guerre des mines), qu'au données de sondeurs, éventuellement multi-faisceaux comme les (MBES) pour « MultiBeam Echo Sounder » en anglais, ou aux sonars de lutte anti sous-marine (ASuW) pour « Anti-Submarine Warfe » en anglais ou encore à tout affichage à haute dynamique tel que les affichages connus sous le nom d'*Activé Geographic Plot* (AGP) décrit dans la demande de brevet EP120488B1 ou *Energy Geographic Plot* (EGP) décrit dans la demande de brevet EP1360522B1. Dans le domaine du radar, elle est particulièrement indiquée dans la visualisation de données à fort contraste, tel que rencontré en surveillance maritime.

Dans un mode de réalisation, l'invention consiste en un procédé de visualisation de données matricielles $I$ contenant des valeurs de forte dynamique prises dans un intervalle $[A,B]$ connu, permettant de transformer la matrice en un tableau à deux dimensions contenant des vecteurs de taille '3' représentant des couleurs pouvant être affichées sur un périphérique de visualisation tel qu'un écran, ou être imprimées. Le tableau résulte de la combinaison par le biais d'une moyenne pondérée, d'une première image couleur dite de « basse intensité » dont les couleurs représentent des informations d'amplitude situées entre $[A,A + T_1]$, et d'une seconde image couleur de « haute intensité » dont les couleurs représentent des informations d'amplitude situées entre $[A,A + T_2]$, et où toutes les données supérieures à $A + T_2$ sont représentées de la même couleur que les données de valeur $A + T_2$. Avantageusement le procédé est caractérisé en ce que l'image de « haute intensité » subit un filtrage passe-bas non linéaire tel que la largeur de la zone où la valeur absolue de la réponse impulsionnelle locale du filtre est non négligeable, croît avec l'intensité locale de l'image en ce point, créant un halo autour des points de forte intensité, halo dont la taille augmente avec l'intensité locale. De manière avantageuse, le filtre passe-bas non linéaire ainsi que les palettes de couleurs utilisées pour le rendu des images de « basse intensité » et « haute intensité » sont judicieusement configurés pour permettre à un opérateur d'effectuer plus facilement les tâches suivantes :

- visualiser des données de faible et forte intensité de manière simultanée ;
- détecter et interpréter la disposition spatiale de points correspondant à du signal de forte intensité (souvent associés physiquement à des cibles) ; la probabilité de cette détection par un opérateur est sensiblement augmentée par l'augmentation de leur taille spatiale grâce à l'étape de filtrage passe-bas non linéaire, ce qui permet alors de voir des zones de forte intensité auparavant invisibles car trop petites;
- lire le niveau d'intensité des points par le biais de la couleur et de la luminance, ainsi que par la taille des halos autour des échos obtenus grâce à l'étape de filtrage non linéaire.

Pour obtenir les résultats recherchés, un procédé de rendu d'image pour des données matricielles issues d'un signal d'entrée ayant une forte dynamique est proposé. Le procédé mis en œuvre par ordinateur comprend des étapes consistant à :

- générer à partir des données matricielles une première image couleur dite « image de basse intensité » dont les couleurs représentent des intensités faibles du signal d'entrée ;

- générer à partir des données matricielles une seconde image couleur dite « image de haute intensité » dont les couleurs représentent des intensités fortes du signal d'entrée, ladite étape comprenant au moins une étape de filtrage consistant à appliquer en chaque point $(x,y)$ de l'image, un filtre passe-bas non linéaire de réponse impulsionnelle monomodale, symétrique centralement par rapport au point de coordonnées (0,0);

- générer une image couleur fusionnée combinant point à point l'image de basse intensité et l'image de haute intensité en une moyenne, pondérée par un facteur constant, de chacune des composantes de couleurs;

- normaliser l'image combinée de manière à ce qu'en chaque point, la luminance de l'image résultante soit égale à la luminance de l'image de basse intensité; et

- redimensionner l'image résultante sur au moins un axe de la matrice.

Selon des modes de réalisation :

- la génération de l'image de basse intensité comprend des étapes consistant à construire une première matrice temporaire égale à l'image originale I à laquelle est soustrait son minimum A, puis à construire une seconde matrice temporaire égale à la première, sauf pour les entrées de valeur supérieure à un seuil prédéfini $T_1$ , lesdites entrées étant mises à $T_1$ , puis à construire une image couleur de basse intensité à partir de la seconde matrice temporaire, par application d'une première palette de couleurs.

- la génération de l'image de haute intensité comprend des étapes consistant à :

- calculer une troisième matrice temporaire, égale partout à la première matrice temporaire, sauf pour les entrées de valeur inférieure au seuil prédéfini $T_1$, lesdites entrées étant mises à zéro, et sauf pour les entrées de valeur supérieure à un seuil $T_2$, lesdites entrées étant mises à $T_2$;

- calculer le maximum de cette troisième matrice temporaire;

- appliquer à la troisième matrice temporaire un filtrage passe-bas non linéaire de réponse impulsionnelle monomodale, symétrique centralement par rapport au point de coordonnées (0,0);

- diviser point à point le résultat du filtrage passe-bas non linéaire, par le maximum global de ce résultat, et multiplier par le maximum de la troisième matrice temporaire ; et

- construire une image couleur de haute intensité par application d'une seconde palette de couleurs au résultat de cette division.

De manière plus précise, la réponse impulsionnelle locale du filtre passe-bas non linéaire a les propriétés suivantes : elle est séparable, elle est maximale en l'origine, elle décroît symétriquement autour de l'origine, et ses « largeurs typiques », correspondant aux dimensions selon les deux axes de la matrice de l'image de la zone où ladite réponse est sensiblement non nulle, sont croissantes avec l'intensité du signal en entrée de l'étage.

Dans des variantes de réalisation :

- le redimensionnement de l'image résultante consiste en un sur-échantillonnage ou un sous-échantillonnage sur au moins l'un des deux axes, par des facteurs qui sont soit prédéfinis, soit laissés à la commande de l'opérateur ;

- les largeurs typiques de la réponse impulsionnelle du filtre non linéaire sur les deux axes horizontaux et verticaux de la matrice de l'image, dépendent de la résolution spatiale des données en entrée le long de ces deux axes ;

- les largeurs typiques de la réponse impulsionnelle du filtre non linéaire sur les deux axes horizontaux et verticaux de la matrice de l'image, dépendent du taux de sur-échantillonnage ou sous-échantillonnage de l'image sur les deux axes ;

- la palette des couleurs utilisée pour générer l'image de basse intensité est de nuance et de saturation essentiellement constantes et le codage des données est réalisé par une variation de luminance, laquelle croît avec l'intensité du signal ;

- le signal d'entrée est pré-conditionné pour que sa moyenne sur un horizon local soit contraint à une valeur cible $m$, et où la luminance de la palette des couleurs utilisée pour l'image de basse intensité suit une loi log-sigmoïdale. De manière plus précise, si l'intensité du signal est notée $x$, alors la luminance obéit à la loi $(x/m)^\gamma/((x/m)^\gamma + 1)$ avec $\gamma$ un paramètre constant soit codé en dur, soit fourni par l'opérateur comme un paramètre de réglage ;

- la palette des couleurs utilisé pour générer l'image de haute intensité est d'une part essentiellement de luminance nulle pour $I(x,y) \leq A + T_1$ et croissante avec $I(x,y)$, et d'autre part de nuance et saturation variables, la variation de nuance et de saturation codant une information d'intensité du signal ;

- la réponse impulsionnelle du filtre non linéaire est une fonction gaussienne 2D dont l'écart-type est le paramètre de « largeur typique ».

L'invention couvre aussi un dispositif de rendu d'image pour des données matricielles issues d'un signal d'entrée ayant une forte dynamique, qui comprend des moyens pour mettre en œuvre les étapes du procédé revendiqué dans ses différentes variantes.

L'invention peut opérer sous la forme d'un produit programme d'ordinateur qui comprend des instructions de code permettant d'effectuer les étapes du procédé revendiqué lorsque le programme est exécuté sur un ordinateur.

## Description des figures

Différents aspects et avantages de l'invention vont apparaitre en appui de la description d'un mode préféré d'implémentation de l'invention mais non limitatif, avec référence aux figures ci-dessous :

La figure 1 illustre les fonctions de normalisation et d'écrêtage sur un exemple simplifié de signal 1D;

La figure 2 illustre des étapes générales du procédé d'affichage de données sonar ou radar à haute dynamique selon un mode de réalisation de l'invention;

Les figures 3a et 3b détaillent les étapes du procédé de la figure 2;

Les figures 4a, 4b et 4c illustrent sur un histogramme de valeurs, le principe de création des images écrêtées de basse intensité $E_{lo}$ et de haute intensité $E_{hi}$ à partir d'une donnée initiale $I$;

La figure 5 illustre le principe du filtrage non linéaire;

Les figures 6a et 6b illustrent l'évolution de la valeur de chaque composante de couleur pour respectivement l'image de basse intensité $E_{lo}$ et l'image de haute intensité $E_{hi}$ ; et

La figure 7 illustre le rendu brut d'une pseudo-image sonar ou radar par les techniques usuelles de rendu LDR et HDR en comparaison avec le rendu obtenu par le procédé de l'invention.

**Description détaillée de l'invention**

La description qui suit s'appuie sur des exemples dans le domaine des données sonar pour permettre une bonne compréhension des principes de l'invention, et une application concrète, mais n'est en rien limitative et doit permettre à l'homme du métier d'appliquer des modifications et des variantes d'implémentation en gardant les mêmes principes.

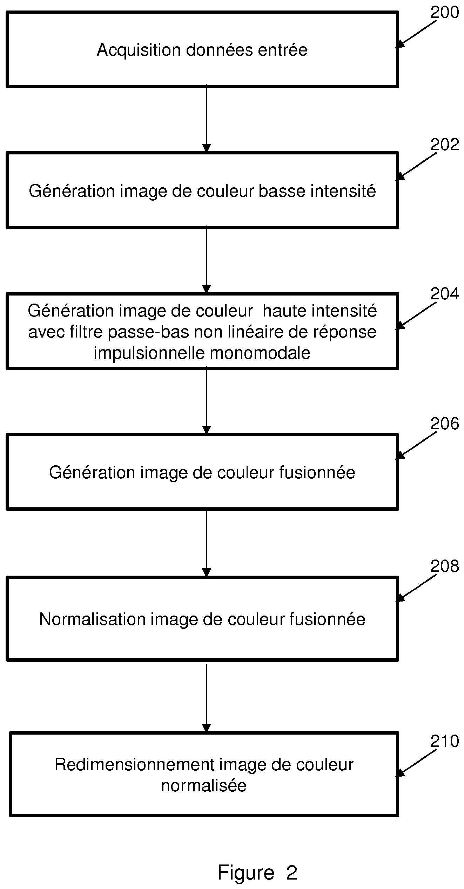

Passant à la figure 2, des étapes générales du procédé permettant l'affichage de données sonar ou radar à haute dynamique selon un mode de réalisation de l'invention sont décrites.

Le procédé débute par une étape (200) d'acquisition de données d'entrée. Dans un mode de réalisation, l'entrée est une fonction $I$: $\mathbb{R}^2 \mapsto [A, B]$ ; $(x,y) \to I(x,y)$. Cette fonction est une image 2D. La valeur $I(x,y)$ est une valeur scalaire enregistrée par un senseur (par exemple, proportionnelle à une tension en Volts), correspondant par exemple à une amplitude d'une onde acoustique ou radioélectrique. On note $[U]$, l'unité des valeurs utilisées dans $I$. Dans une implémentation particulière l'image 2D est une matrice 2D où chaque entrée de la matrice contient un scalaire.

L'image a pour résolutions $\rho_x$ (resp. $\rho_y$) sur l'axe $x$ (resp. $y$), ces résolutions étant en unités physiques, comme des unités de distance ou des unités angulaires. Les axes principaux de l'image ne correspondent pas forcément physiquement à des axes orthogonaux.

Dans une étape suivante (202), le procédé permet de générer une première image couleur dite « image de basse intensité » dont les couleurs correspondent à des intensités faibles du signal d'entrée, et notée $I_{lo}(x,y)$.

Dans une étape suivante (204), le procédé permet de générer une seconde image couleur dite « image de haute intensité » dont les couleurs représentent des intensités fortes du signal d'entrée. Avantageusement, la génération de la seconde image couleur comprend au moins une étape de filtrage qui consiste à appliquer en chaque point $(x,y)$ de l'image, un filtre passe-bas non linéaire de réponse impulsionnelle monomodale, symétrique centralement par rapport au point de coordonnées (0,0).

Puis dans une étape suivante (206), le procédé permet de calculer une image couleur fusionnée des premières et deuxièmes images couleur. L'image couleur fusionnée est obtenue en combinant point à point l'image de basse intensité et l'image de haute intensité en une moyenne, pondérée par un facteur constant, de chacune des composantes de couleurs.

Dans une étape suivante (208), le procédé permet de normaliser l'image combinée de manière à ce qu'en chaque point, la luminance de l'image résultante soit égale à la luminance de l'image de basse intensité.

Puis le procédé permet (210) de redimensionner l'image résultante sur au moins un axe de la matrice. La sortie est une fonction $\mathbb{R}^2 \mapsto [0,1]^3$ ; $(x,y) \to O(x,y)$. Cette fonction est une image 2D couleurs correspondant à l'image à afficher. Dans une implémentation particulière, l'image 2D est un tableau 2D contenant, à chaque entrée, un vecteur à trois dimensions contenant les composantes de couleur à afficher.

On peut considérer que les composantes de couleurs sont codées entre 0 et 1 mais un intervalle exact utilisé en pratique peut être différent, par exemple de 0 à 255, sans changer le principe de l'invention.

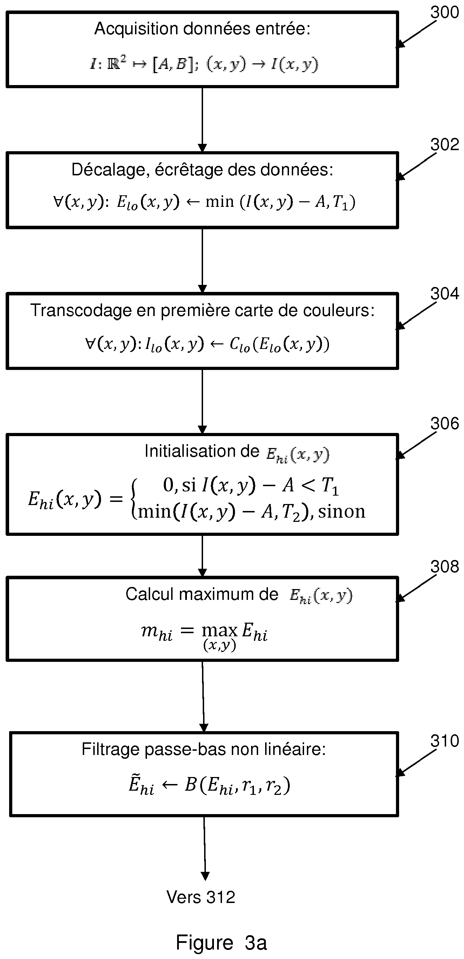

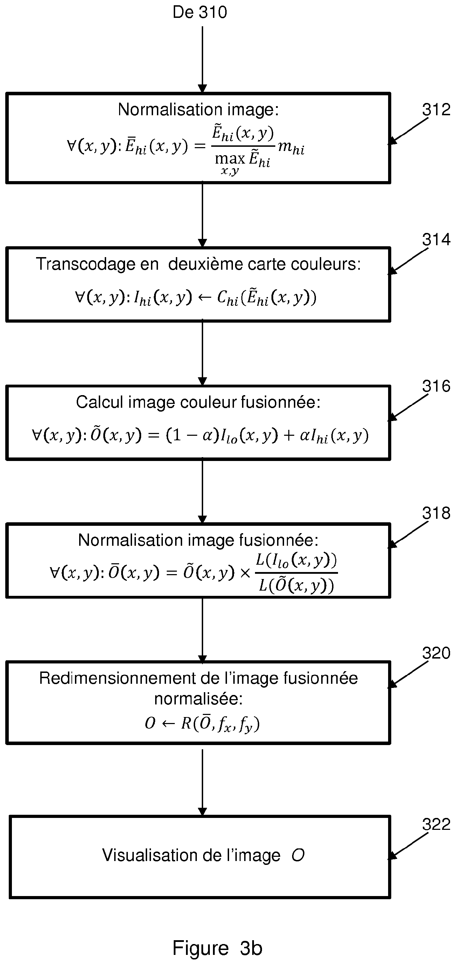

Les figures 3a et 3b illustrent plus en détail les différentes étapes du procédé de la figure 2. Afin de permettre une bonne compréhension de la description, les paramètres suivants sont définis :

- Deux seuils $T_1 > 0$ et $T_2 > T_1$ pris dans $\mathbb{R}$ et exprimés en unités $[U]$ ;

- Deux rayons $r_1$ et $r_2$ exprimés en pixels, variables en fonction de la résolution de l'image $I$ et de la résolution d'affichage de ladite image ;

- Un facteur de pondération $\alpha \in [0,1]$ constant, soit prédéfini, soit paramétrable ;

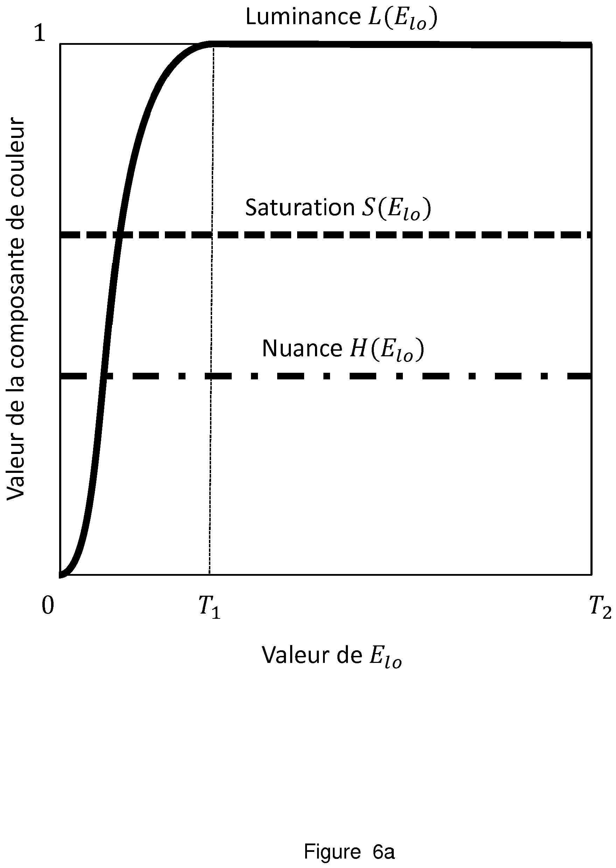

- Une première carte de couleurs $C_{lo}$: $[0,T_1] \mapsto [0,1]^3$ telle que $C_{lo}(0) = [0; 0; 0]^T$ (noir) et $C_{lo}(v) = [1; 1; 1]^T$ pour $v = T_1$. Pour des données sonar ou radar ayant été pré-conditionnées pour que la moyenne de l'image soit sensiblement constante sur un horizon local suffisamment grand, la couleur $C_{lo}(v)$ présente de manière non essentielle mais préférentielle, les trois caractéristiques suivantes illustrées à la figure 6a:

  - La luminance $L(C_{lo}(v))$ est croissante avec $v$ (mais pas forcément de manière linéaire) ;

  - La luminance $L(C_{lo}(v))$ croît encore plus préférentiellement selon une allure log-sigmoïdale, c'est-à-dire selon une sigmoïde avec log $v$.

- La nuance (en anglais « *hue* ») et la saturation (en anglais « *saturation* ») de la couleur varient peu et sont idéalement constantes.

- Une deuxième carte de couleurs $C_{hi}$: $[T_1, T_2] \mapsto [0,1]^3$ telle que, étant données $n$ valeurs $v_i$, $i \in 0..n$ telles que $v_0 = T_1$, $v_i < v_{i+1}$ et $v_n = T_2$, ainsi que $n$ couleurs $C_i$ associées aux valeurs $v_i$ alors :

  - si $v_i \leq v < v_{i+1}$ on a :

$$C_{hi}(v) = \left(1 - \frac{v-v_i}{v_{i+1}-v_i}\right) C_i + \left(\frac{v-v_i}{v_{i+1}-v_i}\right) C_{i+1}$$

  - (moyenne pondérée vectorielle des composantes de couleur) ;

  - $C_0 = [0; 0; 0]^T$ (noir).

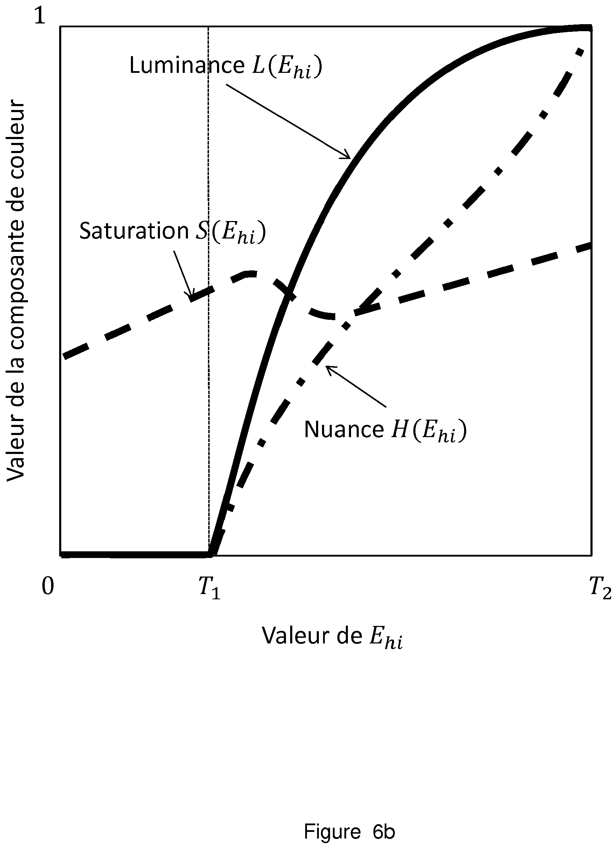

Cette seconde carte de couleur code une information d'intensité par une nuance et une saturation variable, et une luminance croissante (nulle pour toute valeur $v < T_1$). La figure 6b illustre l'évolution de la valeur de chaque composante de couleur (Luminance, Saturation, Nuance) pour la valeur à coder pour la carte de couleurs de l'image de haute intensité.

- Deux facteurs d'échelle $f_x \in \mathbb{R}^+$ et $f_y \in \mathbb{R}^+$ à appliquer sur les axes $x$ et $y$ respectivement, pour redimensionner l'image à l'affichage. Si $f_x$ (resp. $f_y$) est plus grand que 1, alors l'image est agrandie (effet de « zoom avant »), sinon elle est rétrécie (« zoom arrière »). Ces facteurs d'échelle sont soit prédéfinis, soit commandés par l'opérateur/utilisateur par le biais d'une interface graphique ou physique telle qu'une touche clavier, un bouton, une molette ou un potentiomètre par exemple.

Après une première étape (300) d'acquisition et mise en forme des données image selon la fonction $I: \mathbb{R}^2 \mapsto [A, B]; (x, y) \to I(x, y)$, le procédé permet (302) de faire un décalage (en anglais « offset ») et un écrêtage des données de $I$ pour les forcer à résider dans $[0, T_1]$ :

$$E_{lo}(x, y) = \min(I(x, y) - A, T_1)$$

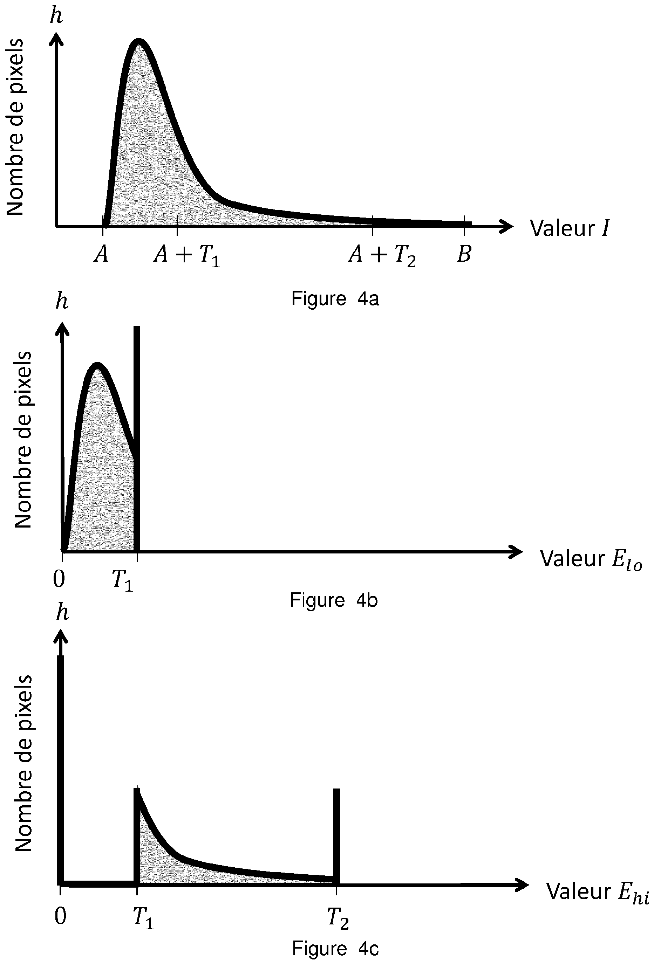

Les figures 4a et 4b illustrent sur un histogramme de valeurs, le principe de constitution de $I$ et de $E_{lo}$ pour la création des images écrêtées de basse intensité $E_{lo}$ à partir d'une donnée initiale $I$. Ainsi sur la figure 4a, $h(I)$ est le nombre $h$ de pixels ayant pour valeur $I$. On constate que la valeur de h(I) est non nulle entre $[A, B]$ pour $I$. Dans la figure 4b, on montre que les valeurs $h(E_{lo})$ sont ramenées entre 0 et $T_1$ par translation de l'histogramme. Un pic est présent en $T_1$ égal au nombre de pixels supérieurs ou égaux à $A + T_1$ dans $I$.

Une fois $E_{lo}$ construite, les données sont ensuite (304) transcodées vers une première carte de couleurs : $C_{lo}(E_{lo}(x,y))$ avec $C_{lo}$ :$[0, T_1] \mapsto [0,1]^3$ telle décrite plus haut.

Les étapes de décalage, écrêtage et transcodage (302, 304) permettent de produire une première image couleur $I_{lo}(x,y)$ correspondant à des intensités faibles dans le signal d'entrée (étape 202 de la figure 2). La valeur $I_{lo}(x,y)$ est donc une couleur, décrite comme un vecteur de trois composantes (rouge, vert, bleu).

Les étapes suivantes (306) à (314) permettent de produire une deuxième image couleur $I_{hi}(x,y)$ correspondant à des intensités fortes dans le signal d'entrée (étape 204 de la figure 2). Ainsi, à l'étape 306, le procédé permet d'initialiser $E_{hi}(x,y)$ à zéro si $I(x,y) - A < T_1$; et à $T_2$ si $I(x,y) - A > T_2$ et $I(x,y) - A$, sinon. C'est-à-dire que seuls les pixels d'intensité trop forte pour être rendus dans $E_{lo}$ sont conservés.

Les figures 4a et 4c illustrent sur un histogramme de valeurs, le principe de création des images écrêtées de haute intensité $E_{hi}$ à partir d'une donnée (ou image) initiale $I$. La figure 4c illustre l'histogramme de $E_{hi}$ où l'on voit un premier pic en zéro correspondant à tous les pixels de valeur inférieure à $A + T_1$ dans $I$, et un second pic en $T_2$ correspondant aux pixels de valeur supérieure à $A + T_2$ dans $I$, le reste de l'histogramme étant le translaté de celui de $h(I)$ (figure 4a).

Puis l'étape (308) permet de calculer le maximum :

$$m_{hi} = \max_{(x,y)} E_{hi} .$$

L'étape suivante (310) permet d'appliquer à $E_{hi}$ une fonction $B(E_{hi})$ qui consiste à réaliser, en chaque point $(x,y)$, un filtrage passe-bas non linéaire de l'image $E_{hi}$ de réponse impulsionnelle monomodale symétrique centralement par rapport au point (0,0).

Avantageusement, plus la valeur de $E_{hi}$ est importante, plus le flou ou halo produit par la fonction $B$ est important, le rayon du halo produit par ledit filtre variant localement en $(x,y)$ et croissant avec $E_{hi}(x,y)$. On note $\tilde{E}_{hi}$ la version filtrée de $E_{hi}$:

$$\tilde{E}_{hi} \leftarrow B(E_{hi}, r_1, r_2)$$

Optionnellement, le flou peut être asservi à la résolution de l'image $\rho_x$, $\rho_y$ et des facteurs d'échelle $f_x$, $f_y$:

$$\tilde{E}_{hi} \leftarrow B(E_{hi}, r_1, r_2, f_x, f_y, \rho_x, \rho_y, b_f, b_p)$$

Dans une implémentation, la fonction de filtrage est définie comme étant:

$$B(E_{hi}, r_1, r_2, f_x, f_y, \rho_x, \rho_x, b_f, b_\rho) =$$

$$\iint_{(u,v)\in\mathbb{R}^2} E_{hi}(x-u, y-v) h(u, v, E_{hi}, x, y, r_1, r_2, f_x, f_y, \rho_x, \rho_y, b_f, b_\rho) du dv$$

où la réponse impulsionnelle 2D locale $h$ du filtre, finie ou infinie, a les caractéristiques suivantes :

- La réponse impulsionnelle est séparable *i.e.* le filtrage 2D peut être réalisé comme un filtrage 1D avec un filtre non linéaire $h_x$ sur l'axe $x$ suivi d'un autre filtrage $h_y$ sur l'autre axe ;

$$A(E_{hi}) = \int_{u\in\mathbb{R}} E_{hi}(x-u, y) h_x(u, E_{hi}, x, y, r_1, r_2, f_x, f_y, \rho_x, \rho_y, b_f, b_\rho) du$$

$$B(E_{hi}) = \int_{u\in\mathbb{R}}[A(E_{hi})](x, y-v) h_y(v, E_{hi}, x, y, r_1, r_2, f_x, f_y, \rho_x, \rho_y, b_f, b_\rho) dv \ .$$

- La réponse impulsionnelle $h_x$ (resp. $h_y$) vaut 1 quand $u$ (resp. $v$) vaut 0 et est décroissante symétriquement autour de 0 en fonction de $u$ (resp. $v$) : elle est monomodale symétrique centralement.
- Le support spatial typique de chacun de ces filtres, c'est-à-dire la largeur de la région où la réponse impulsionnelle des filtres est significativement plus grande que zéro, est proportionnel à un rayon $r_x$ (sur l'axe $x$) et $r_y$ (sur l'axe $y$).
- Ces rayons $r_x$ (sur l'axe $x$) et $r_y$ (sur l'axe $y$) sont variables en fonction de la coordonnée $(x,y)$ ce qui rend le filtre non linéaire et ils suivent les relations suivantes :

$$r_x(E_{hi}(x,y), r_1, r_2, f_x, \rho_x, b_f, b_\rho) = k_x(\rho_x, f_x, f_y, b_f, b_\rho) r(E_{hi}(x,y), r_1, r_2)$$

$$r_y(E_{hi}(x,y), r_1, r_2, f_y, \rho_y, b_f, b_\rho) = k_y(\rho_y, f_y, b_f, b_\rho) r(E_{hi}(x,y), r_1, r_2)$$

avec $r(0, r_1, r_2, f_x, \rho_x, b_f, b_\rho) = r_1$, $r(T_2 - T_1, r_1, r_2, f_x, \rho_x, b_f, b_\rho) = r_2$, la fonction $r$ étant croissante (éventuellement par paliers) avec les valeurs de $E_{ht}(x,y)$.

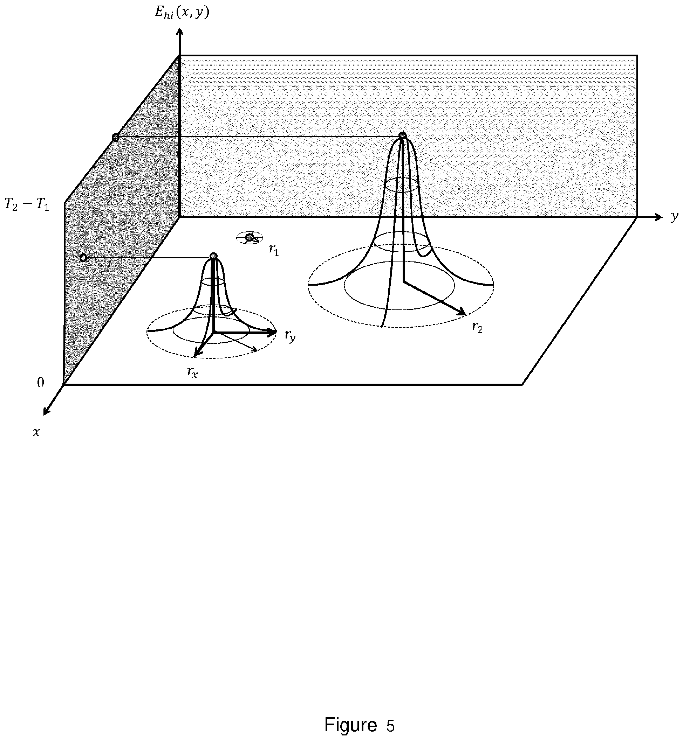

La figure 5 illustre le principe du filtrage non linéaire mis en œuvre dans le procédé de l'invention. Tel que cela est visible, la largeur $r$ des réponses impulsionnelles est dépendante de la valeur de $E_{hi}(x,y)$ et varie entre $r_1$ et $r_2$.

Les termes $k_x$ et $k_y$ sont des facteurs de proportionnalité fonctions de la résolution sur les deux axes $\rho_x, \rho_y$ et des facteurs d'échelle $f_x$ et $f_y$. Ces facteurs de proportionnalité peuvent être choisis selon plusieurs stratégies :

- Soit $k_x = k_y = k$, la constante $k$ exprimée en pixels étant soit prédéfinie dans un fichier de paramétrage par exemple, soit laissée à l'opérateur comme un paramétrage ; dans ce cas le filtre est indépendant de la résolution de l'image d'entrée et la réponse impulsionnelle de $B$ est de taille identique sur les deux axes. Cette option est utilisée lorsque l'opérateur réalise une action de basculement d'un booléen à « faux » par le biais d'une interface graphique ou physique telle qu'un bouton.

- Soit $k_x = \rho_x \times k$ et $k_y = \rho_y \times k$, la constante $k$ exprimée en mètres étant soit prédéfinie dans un fichier de paramétrage par exemple, soit laissée à l'opérateur comme un paramétrage. Dans ce cas le filtre est dépendant de la résolution de l'image d'entrée et la réponse impulsionnelle de $B$ n'est plus de taille identique sur les deux axes. Cette option est utilisée lorsque l'opérateur réalise une action de basculement d'un booléen à « vrai » par le biais d'une interface graphique ou physique telle qu'un bouton.

- On peut également avoir une dépendance de $k_x$ et $k_y$ aux facteurs d'échelle $f_x$ et $f_y$. Par exemple si les facteurs d'échelle augmentent (« zoom avant ») il est intéressant de réduire $k_x$ et $k_y$ afin de réduire le rayon du halo induit par $B$ ; et inversement en cas de « zoom arrière » ou l'on souhaite au contraire augmenter le rayon du halo.

Par ailleurs, la forme et l'implémentation exacte du filtre n'a aucune importance du moment que les caractéristiques sont vérifiées. Deux exemples de filtres sont donnés :

- Le filtre gaussien avec:

$$h_x\big(u, E_{hi}, x, y, r_1, r_2, f_x, \rho_x, b_f, b_\rho\big) = \exp\left(-\frac{u^2}{r_x(E_{hi}(x,y), r_1, r_2, f_x, \rho_x, b_f, b_\rho)^2}\right);$$

$$h_y\big(v, E_{hi}, x, y, r_1, r_2, f_y, \rho_y, b_f, b_\rho\big) = \exp\left(-\frac{v^2}{r_y(E_{hi}(x,y), r_1, r_2, f_y, \rho_y, b_f, b_\rho)^2}\right);$$

- Le filtre exponentiel avec:

$$h_x\big(u, E_{hi}, x, y, r_1, r_2, f_x, \rho_x, b_f, b_\rho\big) = \exp\left(-\frac{|u|}{r_x(E_{hi}(x,y), r_1, r_2, f_x, \rho_x, b_f, b_\rho)}\right);$$

$$h_y\big(v, E_{hi}, x, y, r_1, r_2, f_y, \rho_y, b_f, b_\rho\big) = \exp\left(-\frac{|v|}{r_y(E_{hi}(x,y), r_1, r_2, f_y, \rho_y, b_f, b_\rho)}\right);$$

L'homme du métier comprend que l'implémentation de ces filtres peut subir diverses optimisations connues notamment pour accélérer la vitesse du calcul, mais qui ne changent en rien l'essence de l'invention.

Revenant à la figure 3, après l'étape de filtrage, le maximum de $\tilde{E}_{hi}$ est différent de celui de $E_{hi}$. Le procédé permet (312) de renormaliser l'image (linéairement) pour que son maximum redevienne $m_{hi}$ :

$$\bar{E}_{hi}(x,y) = \frac{\tilde{E}_{hi}(x,y)}{\max_{x,y} \tilde{E}_{hi}} m_{hi}$$ , puis de transcoder (314) les données vers une deuxième carte de couleurs:

$$I_{hi}(x,y) = C_{hi}(\bar{E}_{hi}(x,y))$$

avec $C_{hi} : [0, T_2 - T_1] \mapsto [0,1]^3$ telle décrite plus haut. La valeur $I_{hi}(x,y)$ est donc une couleur, décrite comme un vecteur de trois composantes (rouge, vert, bleu).

Dans une étape suivante (316), le procédé permet de calculer une image couleur fusionnée $O(x,y)$, définie comme la moyenne pondérée par $\alpha$, pour chacune des trois composantes (rouge, vert, bleu) :

$$\tilde{O}(x,y) = (1 - \alpha)I_{lo}(x,y) + \alpha I_{hi}(x,y)$$

Cette image couleur contient des données de basse intensité combinées avec des données de haute intensité entourées d'un halo, le halo ayant été obtenu précédemment à l'étape 310.

Le procédé permet ensuite (318) de renormaliser l'image fusionnée afin de retrouver la luminance de l'image de basse intensité :

$$\bar{O}(x,y) = \tilde{O}(x,y) \times \frac{L(I_{lo}(x,y))}{L(\tilde{O}(x,y))}$$

Dans une étape suivante (320), le procédé permet de redimensionner l'image normalisée selon des facteurs d'échelle, un facteur $f_x$ sur l'axe des $x$ et un facteur $f_y$ sur l'axe des $y$, par application d'un algorithme de redimensionnement R: $O \leftarrow R(\bar{O}, f_x, f_y)$

Cette étape utilise classiquement, mais de manière non exclusive un filtre passe-bas anti-repliement de spectre (en anglais « *anti-aliasing* ») suivi d'un ré-échantillonnage.

Le procédé permet ensuite de visualiser (322) l'image redimensionnée obtenue $O : \mathbb{R}^2 \mapsto [0,1]^3; \; (x,y) \rightarrow O(x,y)$, par affichage ou impression par exemple.

Dans des variantes de réalisation, différents traitements algorithmiques peuvent être insérés entre les étapes de redimensionnement (320) et de visualisation (322), entre les étapes d'écrêtage (302) et de transcodage (304), ou même avant l'étape d'écrêtage, sans influence sur les principes du procédé de rendu d'image de l'invention.

Le procédé proposé est une variante de rendu HDR qui est optimisée par l'ajout des étapes de filtrage (204) ou (306 à 314) et par un choix judicieux des cartes de couleurs $C_{lo}$ et $C_{hi}$, non pas dans des nuances monochromatiques (avec nuances et saturations constantes) mais au contraire, et surtout pour $C_{hi}$, dans une palette de couleur riche.

Ainsi, la méthode de l'invention présente les avantages suivants :

- Contrairement au rendu HDR classique, le fait d'appliquer un filtrage passe-bas non linéaire à la partie « haute intensité » de l'image (contenue dans la donnée $E_{hi}$) permet d'augmenter le support spatial des pixels de forte intensité. Ainsi, par exemple dans le domaine du radar ou du sonar, si un écho fort ponctuel est présent, il sera mis en évidence car son support spatial sera augmenté ; il sera donc mieux perceptible même lorsque l'image est rééchantillonnée (« zoom arrière ») à l'étape (320).

- Choisir typiquement la palette de couleurs $C_{lo}$ comme un dégradé de couleurs de nuance et saturation constantes afin de se rapprocher du rendu classique pour les échos faibles qui constituent la majeure partie de la scène. Par contre, pour les quelques échos forts rendus dans les tons de la palette de couleurs $C_{hi}$, le fait de choisir des nuances riches et variées permet de directement coder l'intensité des échos forts, ce qui permet à l'opérateur de réaliser une action d'appréciation de la force des échos par la relation : intensité-couleur. L'impression de force des échos est également renforcée par le fait du support spatial du halo entourant ces échos. La mise en évidence des échos peut participer à un allègement de la charge cognitive de l'opérateur lors de l'analyse de la scène.

- Le fait de pouvoir, par une simple action d'activation d'une option, relier la taille du halo obtenu (constantes $k_x$ et $k_y$) aux paramètres d'échelle de visualisation $f_x$, $f_y$, permet avantageusement à l'opérateur de réaliser deux types de tâches avec pour seule commande l'échelle de visualisation $f_x$, $f_y$, typiquement entrée par le biais d'un périphérique (touches clavier, molette d'une souris, *etc.*) Ces deux tâches sont :

- La détection visuelle des échos forts, qui sont potentiellement des cibles, lorsque le « zoom arrière » est important et que l'opérateur perçoit la scène dans sa globalité, ou au moins sur un horizon large. Cette fonction est possible si l'effet de « halo » est important, ce qui permet de « voir les échos de loin » alors que sans l'étape de filtrage ces échos disparaîtraient par la mise à l'échelle ;

- L'analyse visuelle de la structure des échos, lorsque le niveau de « zoom » codé par les facteurs est important, et où l'opérateur est plus intéressé par la répartition de pixels de signal important (connus par l'homme de l'art sous le nom « points brillants ») le long des cibles, et pour lesquels un fort niveau de précision spatial est important : dans ce cas l'effet de « flou » apporté par l'étape de filtrage passe-bas non linéaire doit être réduit, mais il doit être suffisamment fort pour augmenter la compréhension de la scène par rapport à ce qu'apporterait l'utilisation d'une méthode HDR classique sans l'étape de filtrage non linéaire, et plus encore qu'avec la méthode LDR (où une cible est typiquement un amas de pixels (« pixel blob » en anglais) de couleur uniforme, du fait de l'étape d'écrêtage ramenant tous les pixels forts à une valeur unique).

- Le fait fondamental d'utiliser une palette $C_{lo}$ de couleurs dont la nuance et la saturation sont essentiellement cons-

tantes, et une palette $C_{hi}$ de couleurs riches avec une luminance croissante, permet en outre un effet intéressant, par le biais de l'étape de la moyenne pondérée (316) suivie de la renormalisation effectuée à l'étape (318). En effet la moyenne pondérée permet d'apprécier la présence d'un écho fort sans pour autant masquer la présence de pixels de signal faible au voisinage, qui sera toujours rendu à la même luminance que dans l'image de « basse intensité » à cause de la renormalisation qui suit. Cet effet est important car en radar et en sonar, un signal faible apporte de l'information sur la scène généralement par une ombre. Sans ce choix judicieux des palettes, l'ombre pourrait disparaître.

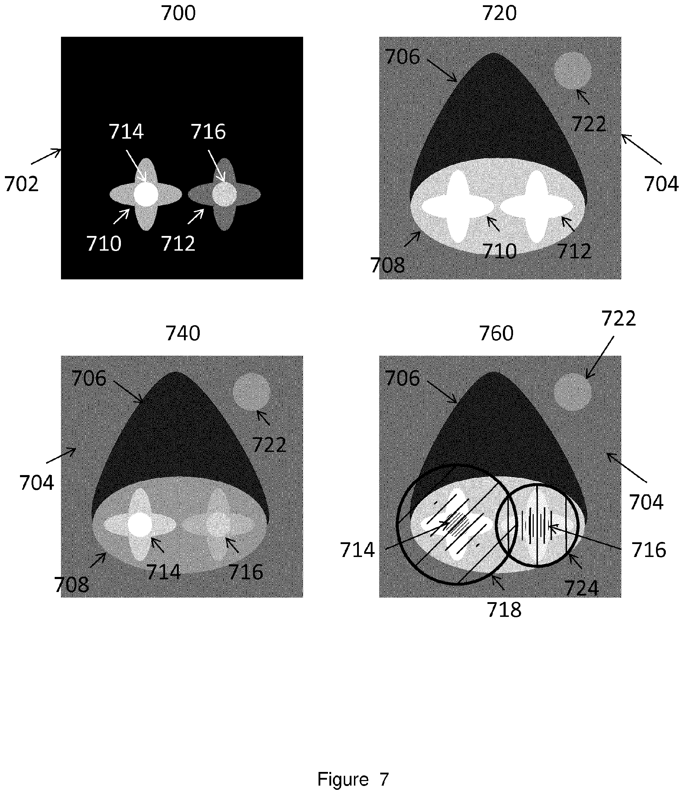

La figure 7 illustre le rendu brut d'une pseudo-image sonar ou radar par les techniques usuelles de rendu LDR (700, 720) et HDR (740) en comparaison avec le rendu (760) obtenu par le procédé de l'invention. Les références représentant les mêmes éléments sont identiques sur les différents résultats de rendu d'image.

Dans le rendu LDR (700), un intervalle [A,B] est mappé linéairement vers un intervalle de luminance [0,1]. Dans ce cas précis, on ne perçoit que quelques rares points brillants (710) et (712). On constate que les points brillants (710) et (712) sont généralement constitués d'un pic central (714), (716) et d'une « base » physiquement créée par les lobes secondaires de l'antenne ou du traitement de compression d'impulsion. Dans l'exemple illustré, les deux points brillants sont d'intensité différente, le point brillant de droite (712) étant d'une intensité moins importante que le point brillant de gauche (710), il est alors rendu dans l'image avec une luminance moins proche du blanc. Par contre, le reste de l'image (702) où la donnée brute est d'intensité très faible, est rendue par une couleur de luminance proche de zéro (noir). Il est donc impossible dans cette approche de rendu LDR de percevoir d'autres objets dans la scène. C'est la limite du rendu linéaire.

Le rendu LDR (720) illustre le résultat de l'écrêtage d'une pseudo-image symbolisant une image sonar ou radar. L'écrêtage révèle une zone d'ombre très sombre (706), une zone de réverbération sombre correspondant au sol (704), un écho intermédiaire isolé (722), une zone d'écho d'intensité médiane (708) supérieure à l'écho isolé (722). Ces éléments n'étaient pas visibles dans le rendu linéaire (700). Les deux points brillants (710) et (712) sont dans cette approche ramenés à la même intensité et apparaissent identiques, ne faisant pas apparaître une différence d'intensité entre leur pic central (714, 716, non visibles) et leur base. Il est donc impossible dans cette approche de comparer l'intensité du signal reçu pour les deux points brillants.

Le rendu HDR (740) d'une pseudo-image sonar ou radar diffère du rendu LDR précédent (720) par le fait que le « *tone mapping* » permet de ramener sélectivement les points brillants (710, 712) à des niveaux de luminance plus bas, permettant ainsi d'apprécier leur structure - pics (714, 716) et bases - et de réduire sélectivement la luminance de la zone d'écho d'intensité médiane (708) au même niveau que celle utilisée pour représenter l'écho isolé (722) car elle est proche des points brillants (710, 712). Un inconvénient de ce type de rendu HDR est que la surface spatiale des pics (714, 716) reste très modeste. Un autre inconvénient est que le niveau de luminance utilisé pour rendre les échos (708, 722) est identique alors que l'intensité des données brutes est différente, ce qui ne permet pas de comparer les intensités relatives des objets.

La figure 7 illustre symboliquement en bas à droite (760) le rendu d'une pseudo-image sonar ou radar par application du procédé de l'invention. Ainsi, le rendu des éléments de basse intensité (704), (706), (708) et (722) est réalisé en conservant une relation d'ordre entre les luminances (par rapport à l'intensité de la donnée brute), contrairement au rendu HDR (740). Le rendu des éléments de haute intensité se fait en privilégiant l'utilisation de la nuance et de la saturation des couleurs, au lieu de la luminance, ce qui est symbolisé par des hachures, utilisées pour rendre les pics des points brillants (714) et (716), la différence de ces nuances et saturation codant le niveau de signal. Enfin, l'étendue spatiale des pics (714) et (716) est augmentée par l'effet de halo, symbolisé par des cercles hachurés (718) et (724), dont le rayon augmente avec l'intensité des pics. Cet effet de halo est configuré pour utiliser principalement la couleur et ne pas masquer les ombres (706) lors de l'étape de combinaison des images de haute et de basse intensité.

L'homme de l'art peut penser que la méthode est inspirée de l'effet de halo produit en imagerie optique par l'effet de « *blooming* ».

Pour rappel, le *blooming* ou « *glare* » (éblouissement) est un effet qui résulte de causes physiques et physiologiques dans l'œil humain résultat de la diffusion de la lumière dans la cornée, la rétine ou bien la lentille de l'appareil de mesure ainsi que la diffraction dans ces mêmes milieux. Ces effets provoquent un halo lumineux autour d'objets très lumineux dans une scène, qui viennent masquer les objets peu lumineux situés à proximité. Cet effet peut être modélisé par la convolution d'une image radiométrique avec une fonction de réponse impulsionnelle $P(\theta)$ dépendant de l'angle $\theta$ formé par la droite $(SI_S)$ et la droite $(S,I)$ où $S$ est la position de la source lumineuse dans la scène, $I_S$ est l'image de la source sur le plan du senseur (CCD, rétine), et $I$ un autre point quelconque du plan du senseur. La réponse impulsionnelle est :

$$P(\theta) = a\delta(\theta) + \frac{k}{F(\theta)}$$

avec $\delta$ la distribution de Dirac, $a$ la fraction de lumière non diffusée, et $F$ une fonction de l'angle $\theta$ qui détermine la diffusion (avec $\int k F(\theta)$ valant typiquement 10% pour un observateur humain). Plusieurs modèles existent pour $F$ dont notamment le modèle de Vos décrit dans Greg Spencer; Peter Shirley; Kurt Zimmerman; Donald P. Greenberg (1995), "Physically-based glare effects for digital images". Siggraph: 325. doi:10.1145/218380.218466. ISBN 0897917014. Il convient de bien souligner que le rayon perçu du halo dépend de l'angle $\theta$ sous-tendu par l'objet à la position de l'observateur ou de manière équivalente, de la distance de l'observateur (du senseur) à la source lumineuse. En sonar et en radar ce phénomène ne se manifeste pas. Aussi, le *blooming* tel qu'actuellement connu dans la littérature n'est pas un effet qui est ajouté dans la représentation des images sonar ou radar.

La simulation du *blooming* est communément réalisée dans le domaine du jeu vidéo aujourd'hui afin d'augmenter la sensation de réalisme et la perception de l'intensité d'une source lumineuse. Ce rendu est généralement effectué en temps réel par le biais d'un programme nommé « *shader* » sur une carte graphique. Cette simulation de *blooming* est couramment ajoutée comme un étage suivant celui d'un rendu HDR, mais uniquement pour la simulation d'images optiques.

La méthode proposée diffère sensiblement de ce procédé par le fait que la loi utilisée pour calculer le rayon du halo ne dépend pas de la distance de l'observateur à la cible ni de l'angle sous-tendu par celle-ci, mais dépend d'autres paramètres avec une formulation judicieusement choisie pour réaliser des effets augmentant la visibilité des cibles. Il ne s'agit pas du *« blooming »* connu pour les raisons suivantes. Tout d'abord, la méthode proposée n'utilise pas les équations physiques du *blooming,* et notamment, la réponse impulsionnelle du filtre utilisée à l'étape (310) varie en fonction de l'intensité du signal ce qui n'est pas le cas du *blooming.* De plus, contrairement à la simulation du *blooming* couramment utilisée dans le domaine du jeu vidéo, la taille de ladite réponse impulsionnelle peut être judicieusement paramétrée et reliée à l'échelle de l'image afin de produire deux effets intéressants en fonction de ladite échelle : la détection des échos forts à une résolution réduite, et l'analyse des points brillants des cibles, à pleine résolution. Enfin, et de manière fondamentale, le *blooming,* par le fait même qu'il correspond à un éblouissement, masque la présence de signal faible au voisinage d'un pixel de signal fort, ce qui n'est justement pas le cas avec la présente méthode si les palettes de couleurs $C_{lo}$ et $C_{hi}$ sont judicieusement choisies comme décrit plus haut.

## Revendications

1. Un procédé de rendu d'image pour des données matricielles *I* issues d'un signal d'entrée ayant une forte dynamique, le procédé mis en œuvre par ordinateur comprend des étapes consistant à :

   - générer (202) à partir des données matricielles initiales une première image couleur dite « image de basse intensité » dont les couleurs représentent des intensités faibles du signal d'entrée ;
   - générer (204) à partir des données matricielles initiales une seconde image couleur dite « image de haute intensité » dont les couleurs représentent des intensités fortes du signal d'entrée, ladite étape comprenant au moins une étape de filtrage consistant à appliquer en chaque point (x, y) de l'image, un filtre passe-bas non linéaire de réponse impulsionnelle monomodale, symétrique centralement par rapport au point de coordonnées (0,0);
   - générer (206) une image couleur fusionnée combinant point à point l'image de basse intensité et l'image de haute intensité en une moyenne, pondérée par un facteur constant, de chacune des composantes de couleurs;
   - normaliser (208) l'image combinée de manière à ce qu'en chaque point, la luminance de l'image résultante soit égale à la luminance de l'image de basse intensité; et
   - redimensionner (210) l'image résultante sur au moins un axe de la matrice.

2. Le procédé selon la revendication 1 dans lequel l'étape de générer une image de basse intensité comprend des étapes consistant à construire une première matrice temporaire égale à l'image originale *I* à laquelle est soustrait son minimum $A$, puis à construire une seconde matrice temporaire égale à la première, sauf pour les entrées de valeur supérieure à un seuil prédéfini $T_1$, lesdites entrées étant mises à $T_1$, puis à construire une image couleur de basse intensité à partir de la seconde matrice temporaire, par application d'une première palette de couleurs.

3. Le procédé selon la revendication 2 dans lequel l'étape de générer une image de haute intensité comprend des étapes consistant à :

   - calculer une troisième matrice temporaire, égale partout à la première matrice temporaire, sauf pour les entrées de valeur inférieure au seuil prédéfini $T_1$, lesdites entrées étant mises à zéro, et sauf pour les entrées de valeur supérieure à un seuil $T_2$, lesdites entrées étant mises à $T_2$;
   - calculer le maximum de cette troisième matrice temporaire;

- appliquer à la troisième matrice temporaire un filtrage passe-bas non linéaire de réponse impulsionnelle monomodale, symétrique centralement par rapport au point de coordonnées (0,0);
- diviser point à point le résultat du filtrage passe-bas non linéaire, par le maximum global de ce résultat, et multiplier par le maximum de la troisième matrice temporaire ; et
- construire une image couleur de haute intensité par application d'une seconde palette de couleurs au résultat de cette division.

4. Le procédé selon l'une quelconque des revendications 1 à 3 dans lequel le redimensionnement de l'image résultante consiste en un sur-échantillonnage ou un sous-échantillonnage sur au moins l'un des deux axes, par des facteurs qui sont soit prédéfinis, soit laissés à la commande d'un opérateur.

5. Le procédé selon l'une quelconque des revendications 1 à 4 dans lequel les largeurs typiques de la réponse impulsionnelle du filtre non linéaire sur les deux axes horizontaux et verticaux de la matrice de l'image, dépendent de la résolution spatiale des données en entrée le long de ces deux axes.

6. Le procédé selon l'une quelconque des revendications 1 à 5 dans lequel les largeurs typiques de la réponse impulsionnelle du filtre non linéaire sur les deux axes horizontaux et verticaux de la matrice de l'image, dépendent du taux de sur-échantillonnage ou sous-échantillonnage de l'image sur les deux axes..

7. Le procédé selon l'une quelconque des revendications 1 à 6 dans lequel la palette des couleurs utilisée pour générer l'image de basse intensité est de nuance et de saturation essentiellement constantes et le codage des données est réalisé par une variation de luminance, laquelle croît avec l'intensité du signal.

8. Le procédé selon l'une quelconque des revendications 1 à 7 dans lequel le signal d'entrée est pré-conditionné pour que sa moyenne sur un horizon local soit contrainte à une valeur cible m, et où la luminance de la palette des couleurs utilisée pour l'image de basse intensité suit une loi log-sigmoïdale.

9. Le procédé selon l'une quelconque des revendications 1 à 8 dans lequel la palette des couleurs utilisée pour générer l'image de haute intensité est d'une part essentiellement de luminance nulle pour $I(x,y) \leq A + T_1$ et croissante avec $I(x,y)$, et d'autre part de nuance et saturation variables, la variation de nuance et de saturation codant une information d'intensité du signal.

10. Le procédé selon l'une quelconque des revendications 1 à 9 dans lequel la réponse impulsionnelle du filtre non linéaire est une fonction gaussienne 2D dont l'écart-type est le paramètre de « largeur typique ».

11. Le procédé selon l'une quelconque des revendications 1 à 10 comprenant de plus une étape d'affichage ou d'impression de l'image redimensionnée.

12. Un dispositif de rendu d'image pour des données matricielles issues d'un signal d'entrée ayant une forte dynamique, comprenant des moyens pour mettre en œuvre les étapes du procédé selon l'une quelconque des revendications 1 à 11.

13. Un produit programme d'ordinateur, ledit programme d'ordinateur comprenant des instructions de code permettant d'effectuer les étapes du procédé selon l'une quelconque des revendications 1 à 11, lorsque ledit programme est exécuté sur un ordinateur.

**Patentansprüche**

1. Bildwiedergabeverfahren für Matrixdaten I aus einem Eingangssignal mit hoher Dynamik, wobei das computerimplementierte Verfahren die folgenden Schritte umfasst:

- Erzeugen (202), auf der Basis der anfänglichen Matrixdaten, eines als "Niederintensitätsbild " bezeichneten ersten Farbbildes, dessen Farben niedrige Intensitäten des Eingangssignals darstellen;
- Erzeugen (204), auf der Basis der anfänglichen Matrixdaten, eines als "Hochintensitätsbild" bezeichneten zweiten Farbbildes, dessen Farben hohe Intensitäten des Eingangssignals darstellen, wobei der Schritt mindestens einen Filterschritt umfasst, der darin besteht, an jedem Punkt (x, y) des Bildes ein nichtlineares Tiefpassfilter mit monomodaler Impulsantwort anzuwenden, das in Bezug auf den Koordinatenpunkt (0,0) zentral symmetrisch ist;

- Erzeugen (206) eines fusionierten Farbbildes, das das Niederintensitätsbild und das Hochintensitätsbild Punkt für Punkt zu einem mit einem konstanten Faktor gewichteten Mittelwert jeder der Farbkomponenten kombiniert;
- Normalisieren (208) des kombinierten Bildes, so dass in jedem Punkt die Luminanz des ressultierenden Bildes gleich der Luminanz des Niederintensitätsbildes ist; und
- Skalieren (210) des resultierenden Bildes auf mindestens einer Achse der Matrix.

2. Verfahren nach Anspruch 1, wobei der Schritt des Erzeugens eines Niederintensitätsbildes Schritte umfasst, die aus dem Konstruieren einer ersten temporären Matrix gleich dem Originalbild I, von dem sein Minimum A subtrahiert wird, dann dem Konstruieren einer zweiten temporären Matrix gleich der ersten Matrix, mit Ausnahme von Einträgen, deren Wert über einem vordefinierten Schwellenwert $T_1$ liegt, wobei die Einträge auf $_{T1}$ gesetzt werden, dann dem Konstruieren eines Niederintensitätsfarbbildes auf der Basis der zweiten temporären Matrix durch Anwenden einer ersten Farbpalette bestehen.

3. Verfahren nach Anspruch 2, wobei der Schritt des Erzeugens eines Hochintensitatsbildes die folgenden Schritte umfasst:

   - Berechnen einer dritten temporären Matrix, die überall gleich der ersten temporären Matrix ist, mit Ausnahme von Einträgen mit einem Wert unter dem vordefinierten Schwellenwert $T_1$, wobei die Einträge auf Null gesetzt werden, und mit Ausnahme von Einträgen mit einem Wert über einem Schwellenwert $T_2$, wobei die Einträge auf $T_2$ gesetzt werden;
   - Berechnen des Maximums dieser dritten temporären Matrix;
   - Anwenden, auf die dritte temporäre Matrix, einer nichtlinearen Tiefpassfilterung mit monomodaler Impulsantwort, zentral symmetrisch zum Koordinatenpunkt (0,0);
   - Dividieren des Ergebnisses der nichtlinearen Tiefpassfilterung Punkt für Punkt durch das globale Maximum dieses Ergebnisses und Multiplizieren der dritten temporären Matrix mit dem Maximum; und
   - Konstruieren eines Hochintensitätsfarbbildes durch Anwenden einer zweiten Farbpalette auf das Ergebnis dieser Division.

4. Verfahren nach einem der Ansprüche 1 bis 3, wobei die Skalierung des resultierenden Bildes aus einem Upsampling oder Downsampling auf mindestens einer der beiden Achsen durch Faktoren besteht, die entweder vordefiniert sind oder der Steuerung durch einen Operator überlassen werden.

5. Verfahren nach einem der Ansprüche 1 bis 4, wobei die typischen Breiten der Impulsantwort des nichtlinearen Filters sowohl der horizontalen als auch der vertikalen Achse der Bildmatrix von der räumlichen Auflösung der Eingangsdaten entlang dieser beiden Achsen abhängen.

6. Verfahren nach einem der Ansprüche 1 bis 5, wobei die typischen Breiten der Impulsantwort des nichtlinearen Filters sowohl auf der horizontalen als auch der vertikalen Achse der Bildmatrix von der Upsampling- oder Downsampling-Rate des Bildes auf den beiden Achsen abhängen.

7. Verfahren nach einem der Ansprüche 1 bis 6, wobei die zum Erzeugen des Niederintensitätsbildes verwendete Farbpalette eine(n) im Wesentlichen konstante(n) Farbton und Sättigung aufweist und die Codierung der Daten durch eine Änderung der Luminaz erfolgt, die mit der Intensität des Signals zunimmt.

8. Verfahren nach einem der Ansprüche 1 bis 7, wobei das Eingangssignal so vorkonditioniert ist, dass sein Mittelwert über einen lokalen Horizont auf einen Zielwert m beschränkt ist, und wobei die Luminaz der für das Niederintensitätsbild verwendeten Farbpalette einem log-sigmoidalen Gesetz folgt.

9. Verfahren nach einem der Ansprüche 1 bis 8, wobei die zum Erzeugen des Hochintensitätsbildes verwendete Farbpalette einerseits im Wesentlichen die Luminanz Null für $I(x,y) \leq A + T_1$ ansteigend mit $I(x,y)$ und andererseits veränderliche(n) Farbton und Sättigung hat, wobei die Variation von Farbton und Sättigung eine Information über die Intensität des Signals codiert.

10. Verfahren nach einem der Ansprüche 1 bis 9, wobei die Impulsantwort des nichtlinearen Filters eine Gaußsche 2D-Funktion ist, deren Standardabweichung der Parameter "typische Breite" ist.

11. Verfahren nach einem der Ansprüche 1 bis 10, das ferner einen Schritt des Anzeigens oder Druckens des skalierten Bildes umfasst.

**12.** Bildwiedergabegerät für Matrixdaten aus einem Eingangssignal mit hoher Dynamik, das Mittel zur Durchführung der Schritte des Verfahrens nach einem der Ansprüche 1 bis 11 umfasst.

**13.** Computerprogrammprodukt, wobei das Computerprogramm Code-Befehle zur Durchführung der Schritte des Verfahrens nach einem der Ansprüche 1 bis 11 umfasst, wenn das Programm auf einem Computer ausgeführt wird.


**Claims**

**1.** An image rendering method for matrix data *I* from an input signal having a high dynamic range, the method implemented by computer comprising steps consisting in:

- generating (202), from the initial matrix data, a first color image called "low-intensity image", in which the colors represent low intensities of the input signal;
- generating (204), from the initial matrix data, a second color image called "high-intensity image", in which the colors represent high intensities of the input signal, said step comprising at least one filtering step consisting in applying, at each point (x, y) of the image, a non-linear low-pass filter of unimodal impulse response, centrally symmetrical with respect to the point of coordinates (0,0);
- generating (206) a merged color image combining, point-for-point, the low-intensity image and the high-intensity image in an average, weighted by a constant factor, of each of the color components;
- normalizing (208) the combined image so that, at each point, the luminance of the resulting image is equal to the luminance of the low-intensity image; and
- redimensioning (210) the resulting image on at least one axis of the matrix.

**2.** The method according to claim 1, wherein the step of generating a low-intensity image comprises steps consisting in constructing a first temporary matrix equal to the original image *I* from which is subtracted its minimum *A*, then in constructing a second temporary matrix equal to the first, except for the inputs with a value higher than a predefined threshold $T_1$, said inputs being set at $T_1$, then in constructing a low-intensity color image from the second temporary matrix, by application of a first palette of colors.

**3.** The method according to claim 2, wherein the step of generating a high-intensity image comprises steps consisting in:

- calculating a third temporary matrix, equal at all points to the first temporary matrix, except for the inputs with a value lower than the predefined threshold $T_1$, said inputs being set at zero, and except for the inputs with a value higher than a threshold $T_2$, said inputs being set at $T_2$;
- calculating the maximum of this third temporary matrix;
- applying, to the third temporary matrix, a non-linear low-pass filtering of unimodal impulse response, centrally symmetrical with respect to the point of coordinates (0,0);
- dividing, point-by-point, the result of the non-linear low-pass filtering by the overall maximum of this result, and multiplying by the maximum of the third temporary matrix; and
- constructing a high-intensity color image by application of a second palette of colors to the result of this division.

**4.** The method according to any one of claims 1 to 3, wherein the redimensioning of the resulting image consists in an upsampling or a downsampling on at least one of the two axes, by factors which are either predefined, or left to the control of an operator.

**5.** The method according to any one of claims 1 to 4, wherein the typical widths of the impulse response of the non-linear filter on the two horizontal and vertical axes of the matrix of the image depend on the spatial resolution of the input data along these two axes.

**6.** The method according to any one of claims 1 to 5, wherein the typical widths of the impulse response of the non-linear filter on the two horizontal and vertical axes of the matrix of the image depend on the rate of upsampling or downsampling of the image on the two axes.

**7.** The method according to any one of claims 1 to 6, wherein the palette of colors used to generate the low-intensity image is of essentially constant hue and saturation and the coding of the data is performed by a variation of luminance, which increases with the intensity of the signal.

8. The method according to any one of claims 1 to 7, wherein the input signal is preconditioned so that its average on a local horizon is constrained to a target value m, and in which the luminance of the palette of colors used for the low-intensity image follows a log-sigmoid law.

9. The method according to any one of claims 1 to 8, wherein the palette of colors used to generate the high-intensity image is, on the one hand, of essentially zero luminance for $I(x,y) \leq A + TT_1$ and increases with $I(x,y)$, and, on the other hand, of variable hue and saturation, the variation of hue and of saturation coding signal intensity information.

10. The method according to any one of claims 1 to 9, wherein the impulse response of the non-linear filter is a 2D Gaussian function whose standard deviation is the "typical width" parameter.

11. The method according to any one of claims 1 to 10, further comprising a step of displaying or printing the redimensioned image.

12. An image rendering device for matrix data from an input signal having a high dynamic range, comprising means for implementing the steps of the method according to any one of claims 1 to 11.

13. A computer program product, said computer program comprising code instructions allowing execution of the steps of the method according to any one of claims 1 to 11, when said program is run on a computer.

$I(x)$

Signal original

$T$

$x$

$I(x)$

Normalisation
linéaire et écrêtage

$N(x)$
$E(x)$

$T$

$E(x)$

Donnée avant transcodage

$x$

Figure 1

```
┌─────────────────────────────────────────┐  200
│        Acquisition données entrée        │
└─────────────────────────────────────────┘
                    │
                    ▼
┌─────────────────────────────────────────┐  202
│  Génération image de couleur basse       │
│  intensité                               │
└─────────────────────────────────────────┘
                    │
                    ▼
┌─────────────────────────────────────────┐  204
│  Génération image de couleur haute       │
│  intensité avec filtre passe-bas non     │
│  linéaire de réponse impulsionnelle      │
│  monomodale                              │
└─────────────────────────────────────────┘
                    │
                    ▼
┌─────────────────────────────────────────┐  206
│  Génération image de couleur fusionnée   │
└─────────────────────────────────────────┘
                    │
                    ▼
┌─────────────────────────────────────────┐  208
│  Normalisation image de couleur fusionnée│
└─────────────────────────────────────────┘
                    │
                    ▼
┌─────────────────────────────────────────┐  210
│  Redimensionnement image de couleur      │
│  normalisée                              │
└─────────────────────────────────────────┘
```

Figure 2

Acquisition données entrée:

$$I: \mathbb{R}^2 \mapsto [A, B]; \ (x, y) \to I(x, y)$$

300

Décalage, écrêtage des données:

$$\forall(x, y): E_{lo}(x, y) \leftarrow \min(I(x, y) - A, T_1)$$

302

Transcodage en première carte de couleurs:

$$\forall(x, y): I_{lo}(x, y) \leftarrow C_{lo}(E_{lo}(x, y))$$

304

Initialisation de $E_{hi}(x, y)$

$$E_{hi}(x, y) = \begin{cases} 0, \text{si } I(x, y) - A < T_1 \\ \min(I(x, y) - A, T_2), \text{sinon} \end{cases}$$

306

Calcul maximum de $E_{hi}(x, y)$

$$m_{hi} = \max_{(x, y)} E_{hi}$$

308

Filtrage passe-bas non linéaire:

$$\tilde{E}_{hi} \leftarrow B(E_{hi}, r_1, r_2)$$

310

Vers 312

Figure 3a

De 310

Normalisation image: 312

$$\forall(x,y): \bar{E}_{hi}(x,y) = \frac{\tilde{E}_{hi}(x,y)}{\max\limits_{x,y} \tilde{E}_{hi}} m_{hi}$$

Transcodage en deuxième carte couleurs: 314

$$\forall(x,y): I_{hi}(x,y) \leftarrow C_{hi}(\bar{E}_{hi}(x,y))$$

Calcul image couleur fusionnée: 316

$$\forall(x,y): \tilde{O}(x,y) = (1 - \alpha)I_{lo}(x,y) + \alpha I_{hi}(x,y)$$

Normalisation image fusionnée: 318

$$\forall(x,y): \bar{O}(x,y) = \tilde{O}(x,y) \times \frac{L(I_{lo}(x,y))}{L(\tilde{O}(x,y))}$$

Redimensionnement de l'image fusionnée normalisée: 320

$$O \leftarrow R(\bar{O}, f_x, f_y)$$

Visualisation de l'image $O$ 322

Figure 3b

$h$

Nombre de pixels

Valeur $I$

$A$  $A + T_1$  $A + T_2$  $B$

Figure 4a

$h$

Nombre de pixels

Valeur $E_{lo}$

$0$  $T_1$

Figure 4b

$h$

Nombre de pixels

Valeur $E_{hi}$

$0$  $T_1$  $T_2$

Figure 4c

Figure 5

Figure 6a

Figure 6b

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104408752 B
- WO 2007113824 A2
- EP 120488 B1
- EP 1360522 B1

**Littérature non-brevet citée dans la description**

- **FRÉDO DURAND ; JULIE DORSEY.** Fast Bilateral Filtering for the Display of High-Dynamic-Range Images. *ACM Transactions on Graphies,* 2002, vol. 21 (3), 257-266
- Recovering High Dynamic Range Radiance Maps from Photographs. **P. E. DEBEVEC ; J. MALIK.** International Conference on Computer Graphies and Interactive Techniques. Addison-Wesley Publishing Co, 1997
- **MARTIN LAMBERS ; ANDREAS KOLB.** Adaptive Dynamic Range Reduction for SAR /mages. *7m European conference on synthetic aperture radar (EUSAR),* 2008
- **SATOSHI HISANAGA ; KOJI WAKIMOTO ; KOJI OKAMURA.** Compression Method for High Dynamic Range Intensity to Improve SAR Image Visibility. *Proc. International MultiConference of Engineers and Computer Scientists,* 16 Mars 2011, vol. 1
- **GREG SPENCER ; PETER SHIRLEY ; KURT ZIMMERMAN ; DONALD P. GREENBERG.** *Physically-based glare effects for digital images,* 1995, vol. 325, ISBN 0897917014